# EUROPEAN PATENT APPLICATION

(11) **EP 4 761 461 A1**
(43) Date of publication of application: **17.06.2026**
(21) Application number: 24853227.7
(22) Date of filing: 11.04.2024
(51) Int. Cl.: H04W 88/10

(54) **INFORMATION TRANSMISSION METHOD, DEVICE, AND STORAGE MEDIUM**

(30) Priority: 11.08.2023 CN 202311012179
(71) Applicant: ZTE Corporation, Shenzhen, Guangdong 518057 (CN)
(72) Inventor: YUAN, Liquan, Shenzhen, Guangdong 518057 (CN)
(74) Representative: Aipex B.V.
(86) International application number: PCT/CN2024/087242
(87) International publication number: WO 2025/035811

(57) **Abstract**

Provided are an information transmission method, a device, and a storage medium. An information transmission method applied to a first multi-link device includes receiving a specific identifier sent by a first network device; and determining, according to the specific identifier, whether the first network device and a third network device belong to a same second network device.

## Description

### TECHNICAL FIELD

The present application relates to the field of communication technologies, particularly a data transmission method, a device, and a storage medium.

### BACKGROUND

Under an ultra high reliability access point multi-link device (UHR AP MLD) architecture, each extremely high throughput access point multi-link device (EHT AP MLD) may have two to three links. A UHR AP MLD may include hundreds or even thousands of EHT AP MLDs. A non-AP MLD may establish connections with different links of different EHT AP MLDs that belong to the same UHR AP MLD, for example, in a multi-point ranging scenario under the UHR AP MLD architecture. However, the non-AP MLD is unable to determine whether two adjacent links and their associated EHT AP MLDs belong to the same UHR AP MLD.

### SUMMARY

In view of this, embodiments of the present application provide an information transmission method, a device, and a storage medium capable of effectively determining whether EHT AP MLDs associated with two adjacent links belong to the same UHR AP MLD.

Embodiments of the present application provide an information transmission method applied to a first multi-link device. The information transmission method applied to the first multi-link device includes receiving a specific identifier sent by a first network device; and determining, according to the specific identifier, whether the first network device and a third network device belong to the same second network device.

Embodiments of the present application provide an information transmission method applied to a first network device. The information transmission method applied to the first network device includes sending a specific identifier to a first multi-link device to enable the first multi-link device to determine, according to the specific identifier, whether the first network device and a third network device belong to the same second network device.

Embodiments of the present application provide a communication device. The communication device includes a memory and at least one processor.

The memory is configured to store at least one program.

When executed by the at least one processor, the at least one program causes the at least one processor to perform the method of any previous embodiment.

Embodiments of the present application provide a storage medium storing a computer program which, when executed by a processor, causes the processor to perform the method of any previous embodiment.

### BRIEF DESCRIPTION OF DRAWINGS

FIG. 1 is a diagram illustrating implementation of a multi-link connection establishment process according to the related art.
FIG. 2 is a diagram of an extended format of an RNR field according to the related art.
FIG. 3 is a configuration diagram of a multi-link element format according to the related art.
FIG. 4 is a configuration diagram of a UHRAP MLD architecture with centralized ultra high reliability upper media access control (UHR upper MAC) according to the related art.
FIG. 5 is a configuration diagram of a connection model before roaming according to the related art.
FIG. 6 is a configuration diagram of a connection model during roaming according to the related art.
FIG. 7 is a configuration diagram of a connection model after roaming according to the related art.
FIG. 8 is a diagram illustrating implementation of an MLO discovery and connection process according to the related art.
FIG. 9 is a network architecture diagram of a UHR AP MLD according to the related art.
FIG. 10 is a flowchart of an information transmission method according to embodiments of the present application.
FIG. 11 is a flowchart of an information transmission method according to embodiments of the present application.
FIG. 12 is a diagram illustrating implementation of multi-link discovery, authentication, connection, and 4-way handshake according to embodiments of the present application.
FIG. 13 is a configuration diagram of the format of a BSS parameter subfield in an RNR field according to the related art.
FIG. 14 is a configuration diagram of the extended format of a BSS parameter subfield in an RNR field according to embodiments of the present application.
FIG. 15 is a configuration diagram of the format of a TBTT information subfield in an RNR field according to the related art.
FIG. 16 is a configuration diagram of the extended format of a TBTT information subfield in an RNR field according to embodiments of the present application.
FIG. 17 is a configuration diagram of a multi-link element format according to the related art.
FIG. 18 is a configuration diagram of an extended multi-link element format according to embodiments of the present application.
FIG. 19 is a block diagram of an information transmission apparatus according to embodiments of the present application.
FIG. 20 is a block diagram of an information transmission apparatus according to embodiments of the present application.
FIG. 21 is a diagram illustrating the structure of a communication device according to embodiments of the present application.

### DETAILED DESCRIPTION

Embodiments of the present application are described hereinafter in conjunction with drawings. The present application is described hereinafter in conjunction with embodiments and drawings. The embodiments described hereinafter are intended to explain the present application and not to limit the scope of the present application.

In the Wi-Fi 7 protocol, a multi-link operation (MLO) technology is introduced. Multi-link devices (MLDs) include network devices (AP MLDs) and terminal devices (non-AP MLDs). A multi-link device can transmit data on multiple links simultaneously, thereby improving the data transmission throughput and reducing the data transmission delay.

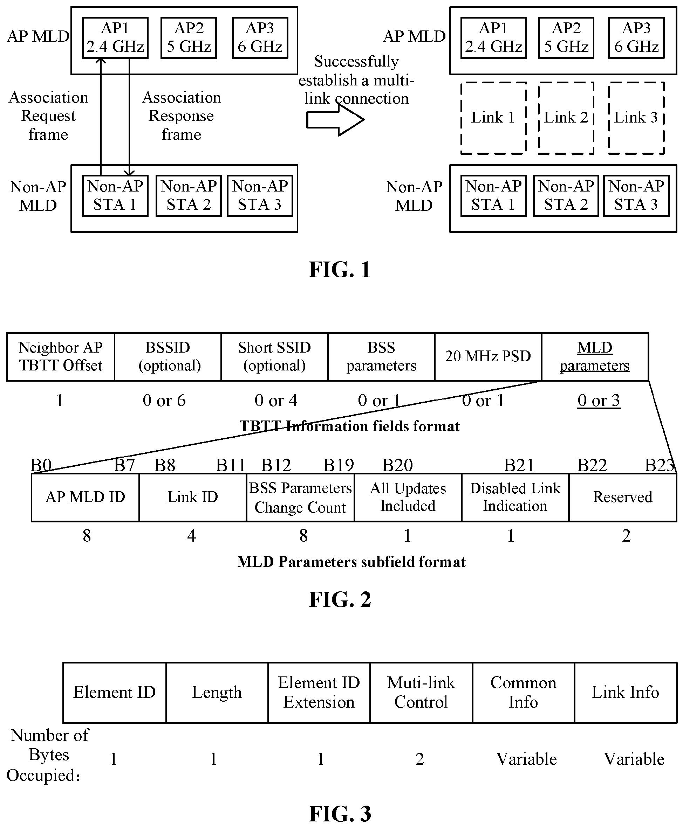

After an AP MLD and a non-AP MLD complete a 4-way handshake on a link, an MLO-level pairwise transient key (PTK) and a link-level group temporal key (GTK) are generated. The PTK and the GTK are used to encrypt transmitted unicast data frames and broadcast data frames and decrypt transmitted unicast data frames and broadcast data frames respectively, thereby ensuring the security of data transmission. By way of example, FIG. 1 is a diagram illustrating implementation of a multi-link connection establishment process according to the related art. As shown in FIG. 1, the AP MLD and the non-AP MLD each include three links operating in the 2.4 GHz, 5 GHz, and 6 GHz bands. The AP MLD and the non-AP MLD complete authentication, association, and the 4-way handshake on the 2.4 GHz link. After a multi-link connection is established, data transmission can be performed on the three links (link1, link2, and link3).

FIG. 2 is a diagram of an extended format of an RNR field according to the related art. As shown in FIG. 2, the Reduced Neighbor Report (RNR) field is extended to include multi-link device (MLD) parameters elements. The MLD parameters elements include the following fields: AP MLD Identifier (ID), Link ID, Basic Service Set (BSS) Parameters Change Count, All Updates Included, and Disabled Link Indication. AP MLD ID indicates a relative index of a neighbor AP MLD. Link ID indicates the index of each link in the AP MLD.

FIG. 3 is a configuration diagram of a multi-link element format according to the related art. As shown in FIG. 3, the frame structure of the multi-link element format includes the following fields: Multi-link Control, Common Info, and Link Info. The Multi-link Control field indicates whether other related information is carried. The Common Info field indicates multi-link common information. The Link Info field indicates the information of each link.

Multi-link elements are widely used in discovery and connection stages. For example, multi-link elements may be carried in beacon frames in a discovery stage, in multi-link probe request/response frames, and in (re)association request/response frames in a connection stage.

Through an MLD ID field, a non-AP MLD can distinguish whether a reported link and a current link belong to the same EHT AP MLD. For example, when the MLD ID equals 0, it is indicated that the reported link and the current link belong to the same EHT AP MLD. When multiple EHT AP MLDs are around one EHT AP MLD, the current EHT AP MLD uniquely indexes each surrounding EHT AP MLD to distinguish between different EHT AP MLDs.

In the Wi-Fi 8 protocol, it is proposed that affiliated APs of the same UHR AP MLD may be deployed at different locations, thereby addressing roaming latency on the device side. In addition, through cooperation between multiple affiliated APs within the same UHR AP MLD, channel utilization can be addressed.

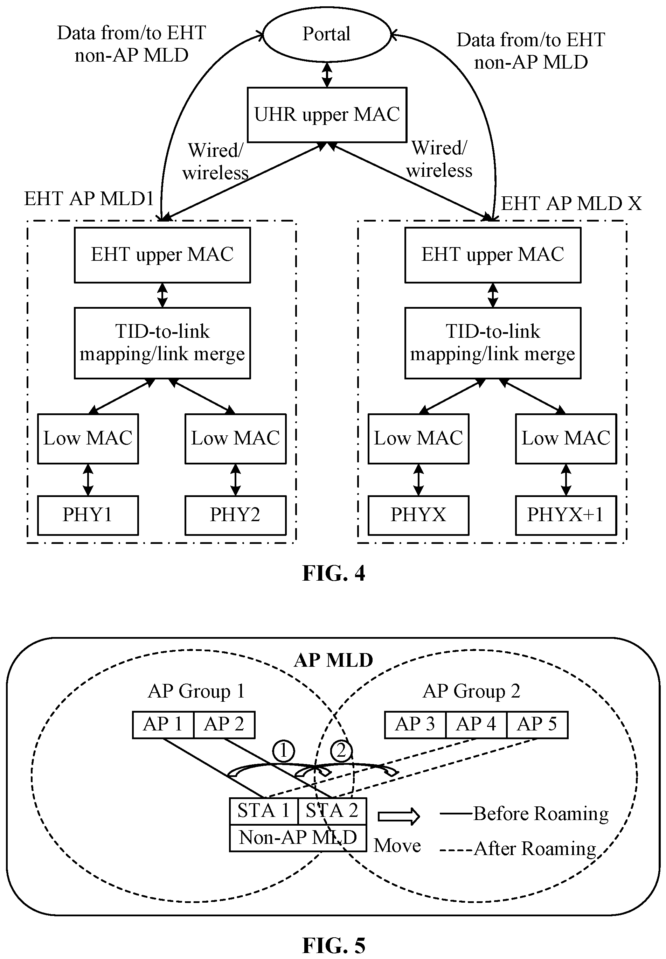

A centralized UHR AP MLD architecture is provided in a seamless roaming solution under a non-peer AP MLD architecture. FIG. 4 is a configuration diagram of a UHR AP MLD architecture with centralized UHR upper MAC according to the related art. As shown in FIG. 4, one UHR AP MLD includes multiple EHT AP MLDs (for example, EHT AP MLD 1, EHT AP MLD 2, ..., EHT AP MLD X) deployed on different physical device nodes and one UHR upper MAC. A UHR non-AP MLD can establish a link connection with the low MAC of any node without switching the connected network, thereby solving data transmission latency caused by network switching.

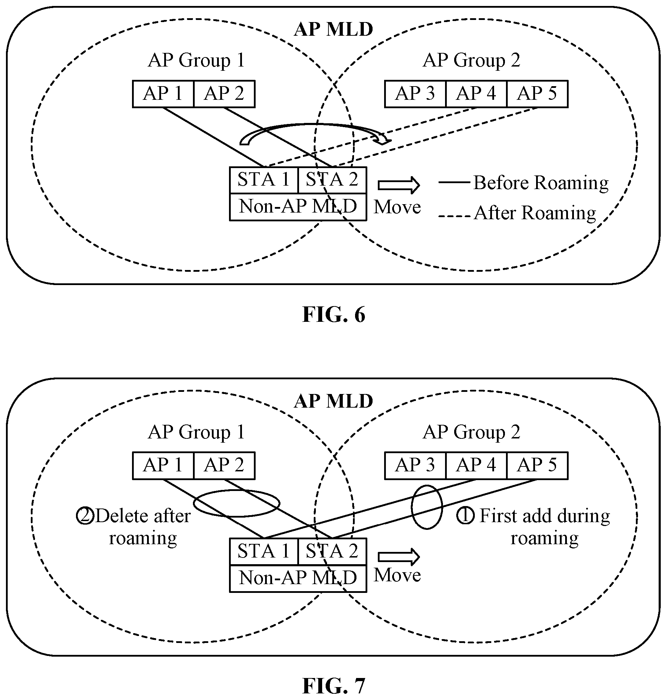

Based on the framework shown in FIG. 4, an overall roaming model is provided, including three stages: pre-roaming, during roaming, and post-roaming. FIG. 5 is a configuration diagram of a connection model before roaming according to the related art. FIG. 6 is a configuration diagram of a connection model during roaming according to the related art. FIG. 7 is a configuration diagram of a connection model after roaming according to the related art. As shown in FIG. 5, before roaming, a non-AP MLD selects a target AP Group and target links (link4, link5). As shown in FIG. 6, during the roaming process, the non-AP MLD is disconnected from a link (AP 1) of AP Group 1 and connected to AP Group 2 (AP4) and then repeats the process by being disconnected from a link (AP2) of AP Group 1 and connected to AP Group 2 (AP5), thereby completing the roaming process. See FIG. 7.

In the related art, a discovery and connection process for multi-link operation (MLO) is provided. During the discovery process, each link of the AP MLD may broadcast a beacon frame carrying reduced neighbor report (RNR) information. In addition, the non-AP MLD may exchange a probe request/response frame with the AP MLD on each link. The non-AP MLD discovers other links belonging to the same AP MLD based on the RNR information carried in the beacon frames and probe response frames; obtains complete information of each link of the AP MLD by sending an ML probe request and receiving an ML probe response; and then establishing a connection with the AP MLD through an ML setup process (including MLO association and a 4-way handshake).

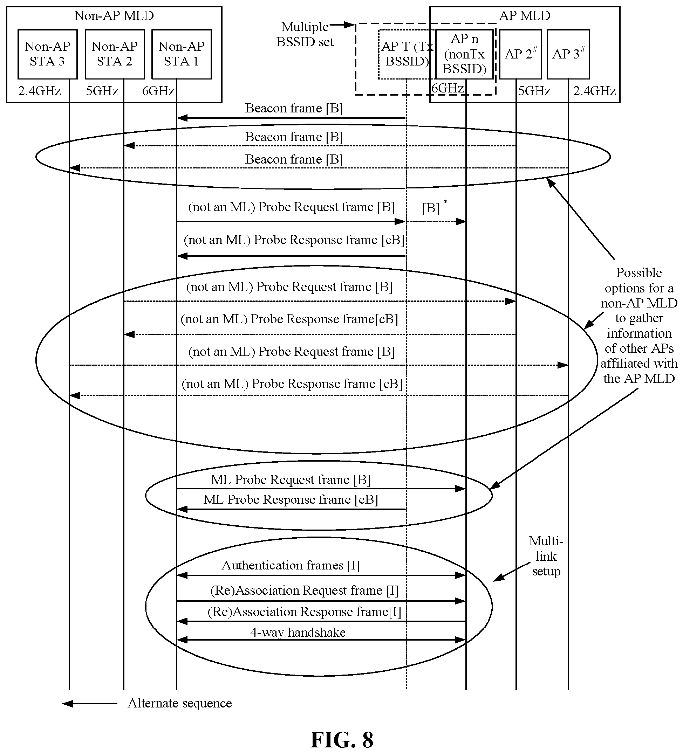

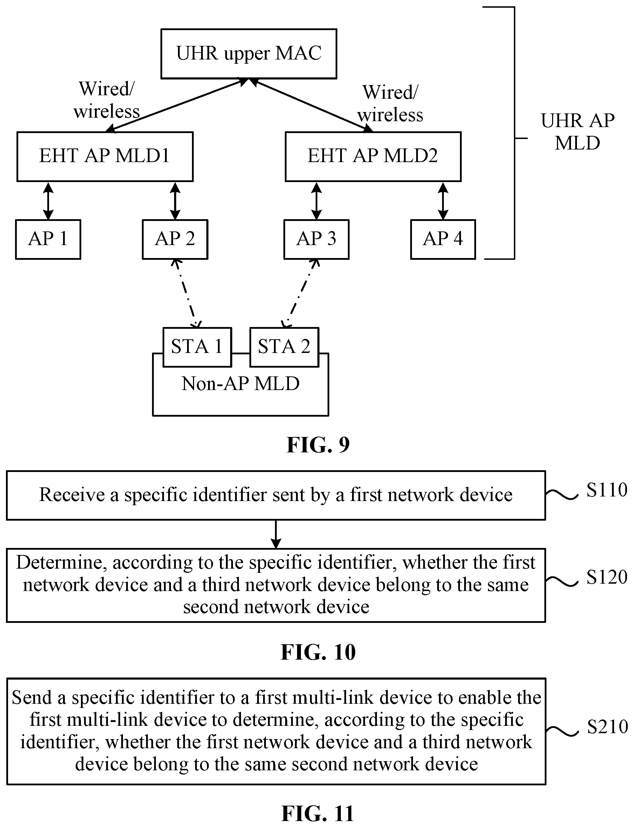

FIG. 8 is a diagram illustrating implementation of an MLO discovery and connection process according to the related art. FIG. 9 is a network architecture diagram of a UHR AP MLD according to the related art. In the framework of the non-collocated access point multi-link device (non-collocated AP MLD) (also referred to as a UHR AP MLD) as shown in FIG. 9, the following problems exist.

First, each EHT AP MLD may have two to three links, and the UHR AP MLD may include hundreds or thousands of EHT AP MLDs. However, the value range of the link ID is 0-14 or 0-15, not satisfying the requirement of uniquely identifying each link within the UHR AP MLD using the link ID.

Second, in some scenarios, the non-AP MLD may be required to establish connections with different links of different EHT AP MLDs belonging to the same UHR AP MLD, such as in a multi-point ranging scenario under the UHR AP MLD architecture. However, the non-AP MLD cannot determine whether two adjacent links and their affiliated EHT AP MLDs belong to the same UHR AP MLD.

Third, in the multi-link association stage, the non-AP MLD can establish connections with multiple links under only one EHT AP MLD and cannot establish multi-link connections across different EHT AP MLDs.

Fourth, although different EHT AP MLDs can be distinguished by MLD IDs, an MLD ID can provide relative information based on only the current EHT AP MLD, such as the number of surrounding EHT AP MLDs, and cannot provide unique identification information of each EHT AP MLD within a UHR AP MLD.

In view of this, embodiments of the present application provide a discovery and connection solution for multiple EHT AP MLDs and multiple links in a UHR AP MLD architecture. For ease of understanding, the relationships between a first network device, a second network device, a third network device, and a fourth network device are described. The first network device, the third network device, and the fourth network device each include multiple links and one EHT high MAC or are each an AP MLD device. The first network device, the third network device, and the fourth network device may each be an EHT AP MLD. The second network device is a UHR AP MLD that includes at least one EHT AP MLD and one UHR high MAC. This high MAC is identified by a unique MAC address. The first multi-link device is a non-AP MLD (for example, a UHR non-AP MLD). When a new EHT AP MLD accesses the network, the UHR AP MLD assigns a unique first-type device identifier to each newly accessed EHT AP MLD.

The following describes the features of embodiments of the present application.

First, a UHR non-AP MLD identifies whether different EHT AP MLDs belong to the same UHR AP MLD through a specific identifier.

Second, a UHR AP MLD assigns a unique first-type device identifier (for example, MLD index or index) to each EHT AP MLD, and the UHR non-AP MLD retrieves information of any link within the UHR AP MLD through (index, link ID).

Third, an EHT AP MLD in the UHR AP MLD may have a co-host or co-located basic service set identifier (co-located BSSID) application scenario with another EHT AP MLD that does not belong to the UHR AP MLD, and information of any link that does not belong to the UHR AP MLD can be retrieved through the <index, MLD ID, Link ID> information.

Fourth, in a multi-link connection process, a multi-link (re)association request frame and a multi-link (re)association response frame include multi-link information of multiple EHT AP MLDs, thereby enabling multi-link connections with multiple EHT AP MLDs.

In an embodiment, FIG. 10 is a flowchart of an information transmission method according to embodiments of the present application. This embodiment can be applied to determining whether two EHT AP MLDs on two adjacent operating links belong to the same UHR AP MLD. This embodiment may be implemented by a first multi-link device. As shown in FIG. 10, this embodiment includes S110 and S120.

In S110, a specific identifier sent by a first network device is received.

In S120, it is determined, according to the specific identifier, whether the first network device and a third network device belong to the same second network device.

In an embodiment, the first multi-link device receives the specific identifier sent by the first network device and determines, according to the specific identifier, whether the first network device and the third network device belong to the same second network device, thereby enabling the first multi-link device to identify, through a single specific identifier, whether the first network device and the third network device belong to the same second network device.

In an embodiment, determining, according to the specific identifier, whether the first network device and the third network device belong to the same second network device includes determining, according to the specific identifier, whether a first network device to which a current working link of the first multi-link device belongs and a third network device to which at least one link carried in the specific identifier belongs belong to the same second network device.

In an embodiment, the specific identifier sent by the first network device is received through a beacon frame. In a passive listening process, the first network device transmits, on multiple links, a specific identifier including at least a second-type device identifier and a first-type device identifier to the first multi-link device through a beacon frame, and the first multi-link device receives, on at least one link and through a beacon frame, the specific identifier transmitted by the first network device so that the first multi-link device discovers, according to the specific identifier, basic multi-link information of one or more second network devices belonging to the same second network device.

In an embodiment, the information transmission method applied to the first multi-link device also includes: transmitting a first probe request frame to the first network device on a working link of the first network device; and receiving, through a first probe response frame, the specific identifier sent by the first network device on a working link. In an active probing process, the first multi-link device transmits a first probe request frame, on at least one link, to at least one first network device of the same second network device; and the first network device replies to the first multi-link device with a first probe response frame on a corresponding link and carries, in the first probe response frame, the specific identifier including at least the second-type device identifier and the first-type device identifier.

In an embodiment, the specific identifier at least includes a second-type device identifier and a first-type device identifier. The second-type device identifier refers to the unique identifier of a UHR AP MLD. For example, the second-type device identifier may be a UHR AP MLD MAC address. The first-type device identifier refers to the unique identifier of an EHT AP MLD. For example, the first-type device identifier may be a multi-link device index (MLD index).

In an embodiment, the specific identifier is located in a Reduced Neighbor Report (RNR) field of the beacon frame and an RNR field of the first probe response frame.

The frame structure of the RNR field at least includes a same-device indication field for indicating whether the first network device and the third network device belong to the same second network device, where the first network device and the third network device belong to the same type of network device.

The frame structure of the RNR field at least includes a first device identifier field for indicating a first-type device identifier assigned by the second network device to the third network device. The first network device and the third network device belong to the same type of network device, for example, an EHT AP MLD. In the beacon frame and the first probe response frame transmitted by the first network device on multiple links, the same-device indication field in the RNR field can be used to indicate whether at least one link of the first network device and the third network device belongs to the same second network device, and the first device identifier field in the RNR field can be used to indicate the first-type device identifier corresponding to the third network device corresponding to this link.

In an embodiment, the beacon frame of the specific identifier and the first probe response frame of the specific identifier each include a multi-link element field. The frame structure of a status bitmap field in the multi-link element field at least includes a first device identifier indication field for indicating whether a first-type device identifier is carried and a second device identifier indication field for indicating whether a second-type device identifier is carried.

The frame structure of a common information field in the multi-link element field at least includes a first device identifier field for indicating a first-type device identifier of the third network device and a second device identifier field for indicating a second-type device identifier of a second network device to which the third network device belongs.

In an embodiment, the information transmission method applied to the first multi-link device also includes: sending a second probe request frame to the first network device; and receiving, through a second probe response frame, the specific identifier sent by the first network device. The second probe request frame is a multi-link probe request frame. The second probe response frame is a multi-link probe response frame. The second probe request frame and the second probe response frame are used for a multi-link probing process under the same second network device. Under the same second network device, the first multi-link device may transmit the second probe request frame, on at least one link, to at least one first network device under the same second network device and carry, in the second probe request frame, a device identifier and a link identifier expected to be retrieved/required to be requested. After the first network device receives the second probe request frame, the first network device replies with the second probe response frame on a corresponding link and carries, in the second probe response frame, the retrieved device identifier and the retrieved link identifier.

In an embodiment, the specific identifier at least includes a first-type device identifier, a second-type device identifier, and a link identifier. In an embodiment, the link identifier indicates the link information of at least one link under each first network device. The link identifier of each link under each first network device is unique. In a multi-link probing process under the same second network device, the link identifier may be carried in the second probe request frame and the second probe response frame.

In an embodiment, the frame structure of a multi-link element field in the second probe request frame at least includes a first device identifier field corresponding to a third network device expected to be retrieved, a second device identifier field of a second network device to which the third network device belongs, and a link identifier field of at least one link in the third network device expected to be retrieved.

The frame structure of a multi-link element field in the second probe response frame at least includes a first device identifier field corresponding to the retrieved third network device, the second device identifier field of the second network device to which the third network device belongs, and a link identifier field of at least one link in the retrieved third network device.

In an embodiment, the information transmission method applied to the first multi-link device also includes sending a third probe request frame to the first network device; and receiving, through a third probe response frame, the specific identifier sent by the first network device. The third probe request frame is a multi-link probe request frame. The third probe response frame is a multi-link probe response frame. The third probe request frame and the third probe response frame are used for a multi-link probing process under different second network device. Under different second network devices, the first multi-link device may transmit the third probe request frame, on at least one link, to a link of at least one first network device under different second network devices and carry, in the third probe response frame, a device identifier and a link identifier expected to be retrieved/required to be requested. After the first network device receives the third probe request frame, the first network device replies with the third probe response frame on a corresponding link and carries, in the third probe response frame, the retrieved device identifier and the link identifier.

In an embodiment, the specific identifier at least includes a first-type device identifier, a second-type device identifier, a link identifier, and a relative identifier of an adjacent first-type device. The relative identifier of the adjacent first-type device indicates the identifier of the first-type device relative to surrounding adjacent first-type devices. The first-type device may be an EHT AP MLD. In a multi-link probing process under multiple second network devices, the relative identifier of the adjacent first-type device as well as the link identifier may be carried in the second probe request frame and the second probe response frame.

In an embodiment, the frame structure of a multi-link element field in the third probe request frame at least includes a first device identifier field corresponding to a third network device expected to be retrieved, a second device identifier field of a second network device to which the third network device belongs, a relative identifier field of a fourth network device, and a link identifier field of at least one link in a fourth network device expected to be retrieved.

The frame structure of a multi-link element field in the third probe response frame at least includes a first device identifier field corresponding to a retrieved third network device, the second device identifier field of the second network device to which the third network device belongs, a relative identifier field, and a link identifier field of at least one link in the retrieved third network device. The fourth network device and the third network device exist on the same physical device.

In an embodiment, the information transmission method applied to the first multi-link device also includes: sending a multi-link association request frame or a multi-link re-association request frame to the first network device; and receiving a multi-link association response frame or a multi-link re-association response frame sent by the first network device. After the first multi-link device completes a multi-link authentication process with the second network device, the first multi-link device may transmit the multi-link association request frame to the first network device on a link, and the first network device replies, on a corresponding link, to the first multi-link device with the multi-link association response frame carrying response information of at least one corresponding link and indicates whether each link is allowed to establish a connection; or the first multi-link device may transmit the multi-link re-association request frame to the first network device on a link, and the first network device replies, on a corresponding link, to the first multi-link device with the multi-link re-association response frame carrying response information of at least one corresponding link and indicates whether each link is allowed to establish a re-connection.

In an embodiment, a multi-link reconnection request frame and a multi-link connection request frame each include at least one multi-link element field; and the frame structure of the at least one multi-link element field at least includes a multi-link device identifier field, a first device identifier field, and a link identifier field.

A multi-link reconnection response frame and a multi-link connection response frame each include a multi-link element field; and the frame structure of the multi-link element field at least includes a second device identifier field, a first device identifier field, a link identifier field, and a link status field.

The multi-link device identifier field indicates the identifier of the first multi-link device that requests to establish a connection or a reconnection. The second device identifier field indicates a second-type device identifier that requests to establish a connection or a reconnection to the first multi-link device. The first device identifier field indicates a first-type device identifier that requests to establish the connection or the reconnection to the first multi-link device. The link identifier field indicates a link identifier that requests to establish the connection or the reconnection to the first multi-link device. The link status field indicates link status information that requests to establish the connection or the reconnection to the first multi-link device.

In an embodiment, FIG. 11 is a flowchart of an information transmission method according to embodiments of the present application. This embodiment can be applied to determining whether two EHT AP MLDs on two adjacent operating links belong to the same UHR AP MLD. This embodiment may be implemented by a first network device. As shown in FIG. 11, this embodiment includes S210.

In S210, a specific identifier is sent to a first multi-link device to enable the first multi-link device to determine, according to the specific identifier, whether the first network device and a third network device belong to the same second network device.

In an embodiment, the information transmission method applied to the first network device also includes: receiving a first-type device identifier assigned by a second network device.

In an embodiment, the first-type device identifier at least includes one of the media access control (MAC) address of a first-type device or the device index of a first-type device.

In an embodiment, the specific identifier is sent to the first multi-link device through a beacon frame.

In an embodiment, in response to receiving a first probe request frame sent by the first multi-link device, the specific identifier is sent to the first multi-link device through a first probe response frame.

In an embodiment, the specific identifier at least includes a second-type device identifier and a first-type device identifier.

In an embodiment, the specific identifier is located in a Reduced Neighbor Report (RNR) field of the beacon frame and an RNR field of the first probe response frame.

The frame structure of the RNR field at least includes a same-device indication field for indicating whether the first network device and the third network device belong to the same second network device, where the first network device and the third network device belong to the same type of network device.

The frame structure of the RNR field at least includes a first device identifier field for indicating a first-type device identifier assigned by the second network device to the third network device.

In an embodiment, the beacon frame of the specific identifier and the first probe response frame of the specific identifier each include a multi-link element field. The frame structure of a status bitmap field in the multi-link element field at least includes a first device identifier indication field for indicating whether a first-type device identifier is carried and a second device identifier indication field for indicating whether a second-type device identifier is carried.

The frame structure of a common information field in the multi-link element field at least includes a first device identifier field for indicating a first-type device identifier of the third network device and a second device identifier field for indicating a second-type device identifier of a second network device to which the third network device belongs.

In an embodiment, in response to receiving a second probe request frame sent by the first multi-link device, the specific identifier is sent to the first multi-link device through a second probe response frame.

In an embodiment, the specific identifier at least includes a first-type device identifier, a second-type device identifier, and a link identifier.

In an embodiment, the frame structure of a multi-link element field in the second probe request frame at least includes a first device identifier field corresponding to a third network device expected to be retrieved, a second device identifier field of a second network device to which the third network device belongs, and a link identifier field of at least one link in the third network device expected to be retrieved.

The frame structure of a multi-link element field in the second probe response frame at least includes a first device identifier field corresponding to the retrieved third network device, the second device identifier field of the second network device to which the third network device belongs, and a link identifier field of at least one link in the retrieved third network device.

In an embodiment, in response to receiving a third probe request frame sent by the first multi-link device, the specific identifier is sent to the first multi-link device through a third probe response frame.

In an embodiment, the specific identifier at least includes a first-type device identifier, a second-type device identifier, a link identifier, and a relative identifier of an adjacent first-type device.

In an embodiment, the frame structure of a multi-link element field in the third probe request frame at least includes a first device identifier field corresponding to a third network device expected to be retrieved, a second device identifier field of a second network device to which the third network device belongs, a relative identifier field of a fourth network device, and a link identifier field of at least one link in a fourth network device expected to be retrieved.

The frame structure of a multi-link element field in the third probe response frame at least includes a first device identifier field corresponding to a retrieved third network device, the second device identifier field of the second network device to which the third network device belongs, a relative identifier field, and a link identifier field of at least one link in the retrieved third network device.

The fourth network device and the third network device exist on the same physical device.

In an embodiment, the information transmission method applied to the first network device also includes receiving a multi-link association request frame or a multi-link re-association request frame sent by the first multi-link device; and sending a multi-link association response frame or a multi-link re-association response frame to the first multi-link device.

In an embodiment, a multi-link reconnection request frame and a multi-link connection request frame each include at least one multi-link element field; and the frame structure of the at least one multi-link element field at least includes a multi-link device identifier field, a first device identifier field, and a link identifier field.

A multi-link reconnection response frame and a multi-link connection response frame each include a multi-link element field; and the frame structure of the multi-link element field at least includes a second device identifier field, a first device identifier field, a link identifier field, and a link status field.

The multi-link device identifier field indicates the identifier of the first multi-link device that requests to establish a connection or a reconnection. The second device identifier field indicates a second-type device identifier that requests to establish a connection or a reconnection to the first multi-link device. The first device identifier field indicates a first-type device identifier that requests to establish the connection or the reconnection to the first multi-link device. The link identifier field indicates a link identifier that requests to establish the connection or the reconnection to the first multi-link device. The link status field indicates link status information that requests to establish the connection or the reconnection to the first multi-link device.

For explanations of parameters involved in the information transmission method applied to the first network device, including the specific identifier, the first-type device identifier, the second-type device identifier, the beacon frame, the first probe request frame, the first probe response frame, the second probe request frame, the second probe response frame, the third probe request frame, and the third probe response frame, see the descriptions of corresponding parameters in the information transmission method applied to the first multi-link device. The details are not repeated here.

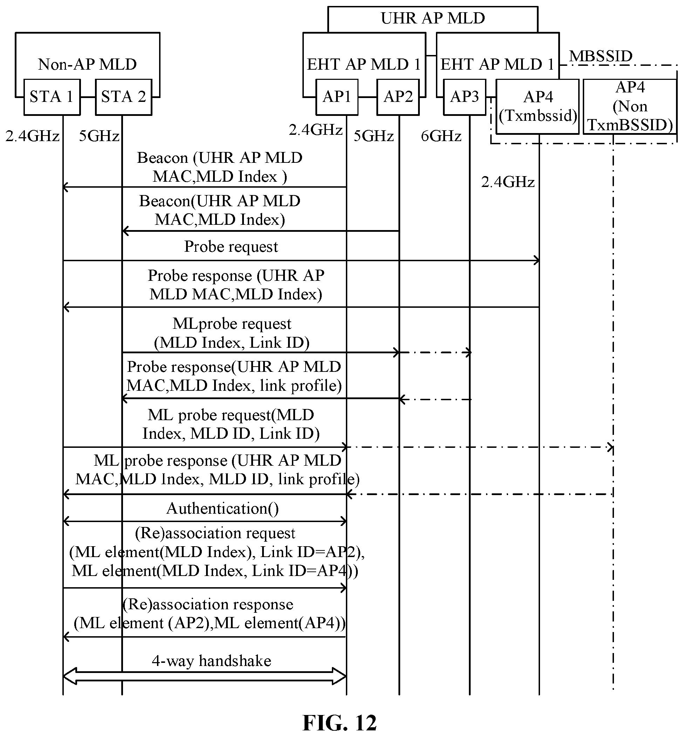

In the following embodiments, FIG. 12 is a diagram illustrating implementation of multi-link discovery, authentication, connection, and 4-way handshake according to embodiments of the present application. In an embodiment, the first multi-link device is a non-AP MLD, the first network device is a first EHT AP MLD, the second network device is a UHR AP MLD, the third network device is a second EHT AP MLD, and the fourth network device is a third EHT AP MLD. As shown in FIG. 12, an implementation process of multi-link discovery, authentication, connection, and 4-way handshake includes the following operations.

In step 1, during passive listening, the EHT AP MLDs notify the first multi-link device (UHR non-AP MLD) of information such as the UHR AP MLD MAC and the MLD index via management frames such as beacon frames and probe response frames on multiple links; and the first multi-link device (UHR non-AP MLD) discovers, on one or more links by receiving the management frames, multiple EHT AP MLDs belonging to the same UHR AP MLD and basic multi-link information of the EHT AP MLDs.

In step 2, during active probing, the UHR non-AP MLD sends first probe request frames to one or more EHT AP MLDs of the same UHR AP MLD on one or more links; and after receiving the first probe request frames, the UHR AP MLD replies with probe response frames on corresponding links and carries information such as the UHR AP MLD MAC and the MLD index.

In step 3, during multi-link probing under the same UHR AP MLD, the UHR non-AP MLD sends second probe request frames (denoted as ML probe request frames) to at least one EHT AP MLD under the same UHR AP MLD on at least one link and carries MLD index and link ID information to retrieve one or more pieces of link information on a specific EHT AP MLD; and after receiving the second probe request frames (denoted as ML probe request frames), the UHR AP MLD replies with ML probe response frames on corresponding links and carries UHR AP MLD information and the requested at least one piece of link information on the at least one EHT AP MLD.

In step 4, during multi-link probing under different UHR AP MLDs, the UHR non-AP MLD sends third probe request frames (denoted as ML probe request frames) to one link of at least one EHT AP MLD under different UHR AP MLDs on at least one link and carries MLD index, MLD ID, and link ID information to retrieve at least one piece of link information on specific EHT AP MLDs; and after receiving the third probe request frames (denoted as ML probe request frames), the UHR AP MLD replies with ML probe response frames on corresponding links and carries UHR AP MLD information and the requested at least one piece of link information on the at least one EHT AP MLD.

In step 5, the UHR non-AP MLD completes a multi-link authentication process with the UHR AP MLD.

In step 6, the UHR non-AP MLD sends a multi-link association request on one link to the UHR AP MLD, where the multi-link association request carries request information of at least one link of at least one EHT AP MLD.

In step 7, the UHR AP MLD replies, to the UHR non-AP MLD and on a corresponding link, with a multi-link association response that includes response information of at least one link of at least one EHT AP MLD and indicates whether each link is allowed to establish a connection.

The following describes steps 1 to 7 in further detail.

In some application examples, steps 1 to 4 correspond to discovery processes in different scenarios. One or more of these steps may be selectively performed in different application examples.

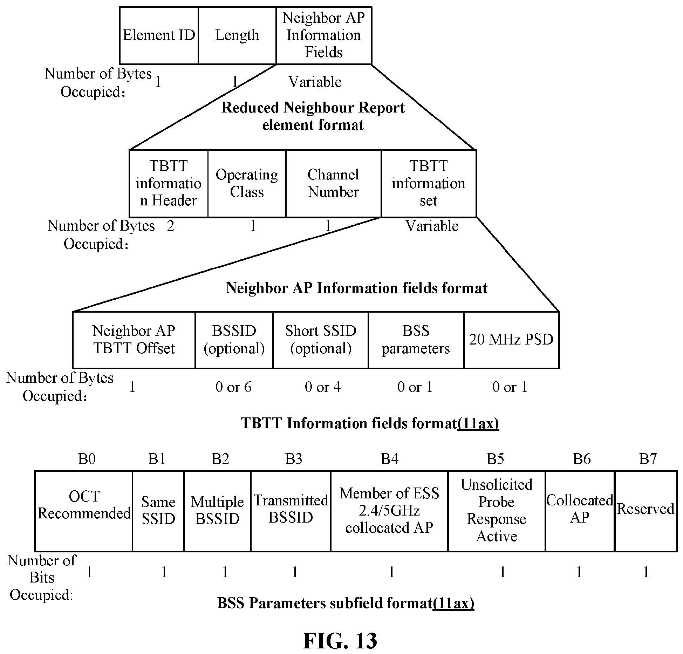

In some application examples, in beacon frames and probe response frames sent by the first EHT AP MLD on multiple links, the RNR field indicates whether the at least one link belonging to the second EHT AP MLD belongs to the same UHR AP MLD information and indicates the MLD index information of the second EHT AP MLD corresponding to the at least one link. FIG. 13 is a configuration diagram of the format of a BSS parameter subfield in an RNR field according to the related art. Table 1 describes the field name and explanation of each field included in the RNR field.

**Table 1 RNR field explanation**

| Field Name | Explanation | Remarks |
|---|---|---|
| Element ID | Field/element identifier | |
| Length | Total element length | |
| TBTT information Header | TBTT information header | Included in the Neighbor AP Information Fields |
| Operating Class | Operating channel class | |
| Channel Number | Operating channel number | |
| TBTT information set | TBTT information set | |
| Neighbor AP TBTT offset | Offset between the neighbor AP TBTT and the current AP TBTT | Included in the TBTT information set |
| BSSID | Basic service set identifier, typically AP MAC address | |
| Short SSID | Short service set identifier | |
| BSS parameter | Basic service set parameter | |
| 20MHz PSD | 20 MHz power spectral density | |
| OCT Recommended | Operating channel tunnel recommended | Included in the BSS parameter field |
| Same SSID | Having the same SSID as the current AP | |
| Multiple BSSID | Supporting multiple BSSID technology | |
| Transmitted BSSID | Transmitted BSSID in multiple BSSID technology | |
| Member of ESS 2.4/5GHz collocated AP | Operating in the 2.4/5 GHz band, collocated on the same physical device as the current AP, and belonging to the same ESS | |
| Unsolicited probe response active | Supporting unsolicited probe response mode | |
| Collocated AP | Collocated on the same physical device as the current AP | |
| Reserved | Reserved | |

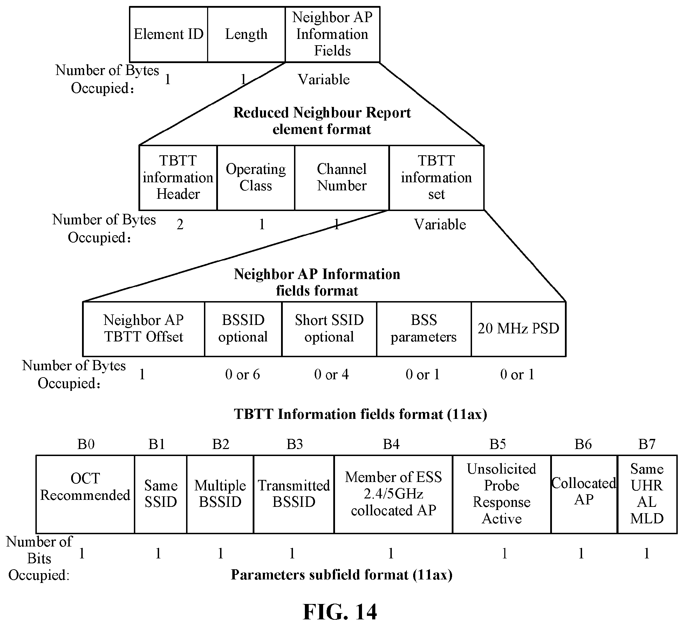

FIG. 14 is a configuration diagram of the extended format of a BSS parameter subfield in an RNR field according to embodiments of the present application. As shown in FIG. 14, on the basis of the RNR field shown in FIG. 13, a Same UHR AP MLD field is added to indicate whether the reported AP/link and the current AP/link belong to the same UHR AP MLD.

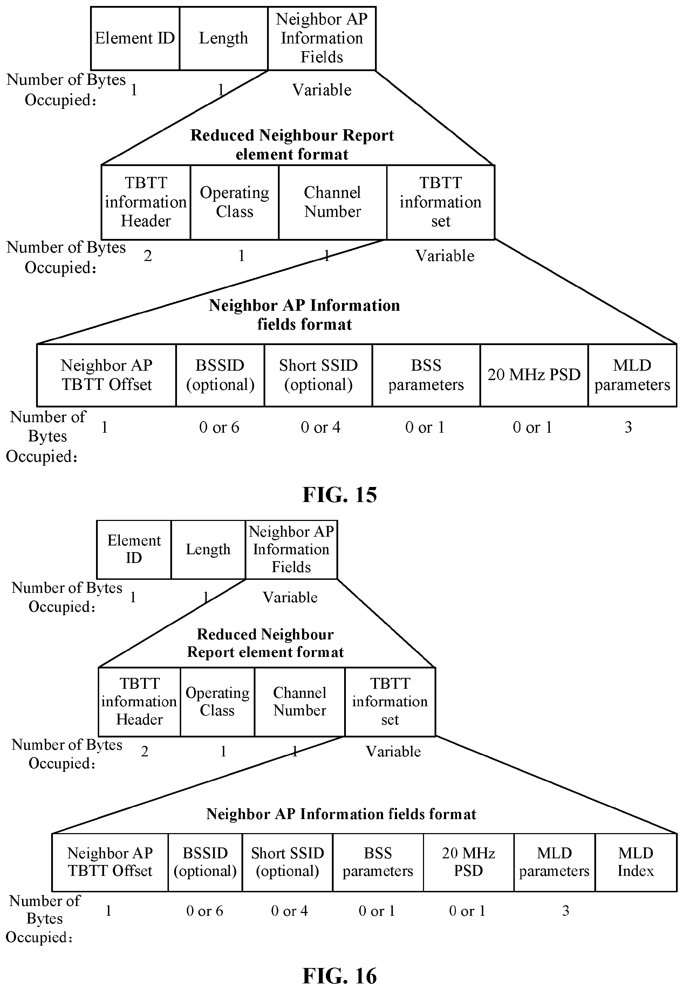

FIG. 15 is a configuration diagram of the format of a target beacon transmission time (TBTT) information subfield in an RNR field according to the related art. FIG. 15 shows the format of the TBTT information field in the RNR field. Table 1 lists the explanation of each field.

FIG. 16 is a configuration diagram of the extended format of a TBTT information subfield in an RNR field according to embodiments of the present application. As shown in FIG. 16, on the basis of the TBTT information field shown in FIG. 15, an MLD index field is added to the TBTT field to indicate an index value assigned by the UHR AP MLD to uniquely identify an EHT AP MLD. This index may also be referred to as a first-type device identifier.

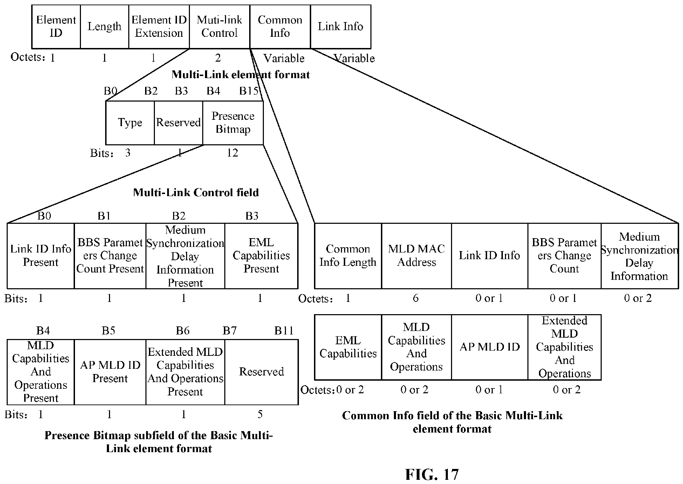

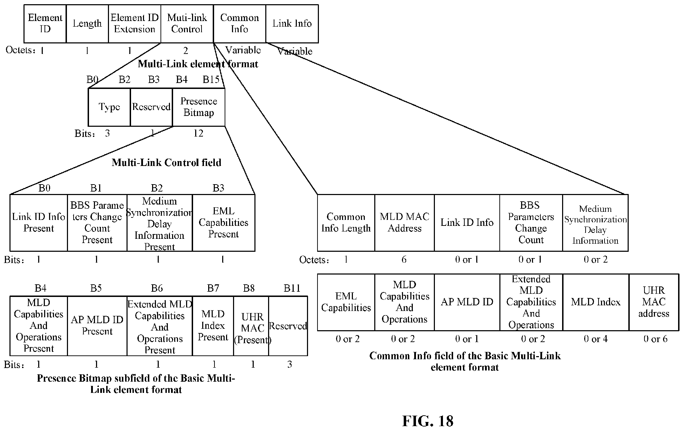

In some application examples, in beacon frames and probe response frames sent by the first EHT AP MLD, the multi-link elements field indicates UHR AP MLD MAC address information and assigned MLD index information. See FIG. 18. FIG. 17 is a configuration diagram of a multi-link element format according to the related art. FIG. 17 shows the configuration of the multi-link element format. Table 2 lists the explanation of each field.

**Table 2 Field explanation of multi-link element format**

| Field Name | Field Explanation | Remarks |
|---|---|---|
| Element ID | Element identifier | |
| Length | Total element length | |
| Element ID Extension | Element identifier extension | |
| Multi-Link Control | Multi-link control field | |
| Common Info | Common information field | |
| Link Info | Link information field | |
| Type | Multi-link element type | |
| Presence Bitmap | Presence bitmap | |
| Link ID Info Present | Link ID information present | Each bit of the presence bitmap indicates whether a corresponding field carries the corresponding information. |
| BSS Parameters | BSS parameter change count present | |
| Change Count Present | | |
| Medium Synchronization Delay Information Present | Medium synchronization delay information present | |
| EML Capabilities Present | Enhanced multi-link capabilities present | |
| MLD Capabilities And Operations Present | Multi-link device capabilities and operations present | |
| AP MLD ID Present | Access point multi-link device identifier present | |
| Extended MLD Capabilities And Operations Present | Extended multi-link device capabilities and operations present | |
| Common Info Length | Length of common information | Included in the common information field |
| MLD MAC Address | Multi-link device MAC address | |
| Link ID Info | Link identifier information | |
| BSS Parameters Change Count | BSS parameter change count | |
| Medium Synchronization Delay Information | Medium synchronization delay information | |
| EML Capabilities | Enhanced multi-link capabilities | |
| MLD Capabilities And Operations | Multi-link device capabilities and operations | |
| AP MLD ID | Access point multi-link device identifier | |
| Extended MLD Capabilities And Operations | Extended multi-link device capabilities and operations | |

FIG. 18 is a configuration diagram of an extended multi-link element format according to embodiments of the present application. As shown in FIG. 18, on the basis of FIG. 17, an MLD index present field and a UHR AP MLD MAC present field are added to the present bitmap field to indicate whether MLD index information and UHR AP MLD MAC address are carried, respectively.

In the common info field, an MLD index field is added to indicate an index value assigned by the UHR AP MLD to the EHT AP MLD corresponding to the link; and a UHR MAC address field is added to indicate UHR AP MLD MAC address information corresponding to the link.

In some application examples, during implementation of step 3, in the ML probe request frame transmitted by the first non-AP MLD to the first EHT AP MLD, the frame structure of the multi-link elements field at least includes a first device identifier field corresponding to a third network device expected to be retrieved, a second device identifier field of a second network device to which a third network device belongs, and a link identifier field of at least one link in the third network device expected to be retrieved. The first device identifier field corresponding to the third network device expected to be retrieved indicates MLD index information assigned to at least one second EHT AP MLD. The second device identifier field of the second network device to which the third network device belongs indicates the second-type device identifier of the UHR AP MLD to which the second EHT AP MLD belongs, for example, UHR AP MLD MAC address information. The link identifier field of at least one link in the third network device expected to be retrieved indicates link ID information corresponding to at least one link of the second EHT AP MLD expected to be retrieved.

In some application examples, during implementation of step 3, in the ML probe response frame replied by the first EHT AP MLD, the frame structure of the multi-link elements field at least includes a first device identifier field corresponding to a retrieved third network device, a second device identifier field of a second network device to which a third network device belongs, and a link identifier field of at least one link in the retrieved third network device. The second device identifier field of the second network device to which the third network device belongs indicates UHR AP MLD MAC address information. The first device identifier field corresponding to the retrieved third network device indicates an MLD index assigned to at least one requested second EHT AP MLD. The link identifier field of at least one link in the retrieved third network device indicates all or part of the link ID information of at least one link in the requested second EHT AP MLD.

In some application examples, the second EHT AP MLD coexists on the same physical device with the third EHT AP MLD that does not belong to the same UHR AP MLD. During implementation of step 4, when the first non-AP MLD retrieves particular link information of the third EHT AP MLD through the first EHT AP MLD, the first non-AP MLD sends the ML probe request frame to the first EHT AP MLD. The multi-link elements field in the ML probe request frame includes a first device identifier field corresponding to a third network device expected to be retrieved, a second device identifier field of a second network device to which a third network device belongs, a relative identifier field of a fourth network device, and a link identifier field of at least one link in a fourth network device expected to be retrieved. The second device identifier field of the second network device to which the third network device belongs indicates UHR AP MLD MAC address information. The first device identifier field corresponding to the third network device expected to be retrieved indicates an MLD index assigned to the second EHT AP MLD. The relative identifier field of the fourth network device indicates MLD ID information of the third EHT AP MLD indicated by the second EHT AP MLD. The link identifier field of at least one link in the fourth network device expected to be retrieved indicates link ID information of at least one link in the third EHT AP MLD indicated by the second EHT AP MLD.

In some application examples, during implementation of step 4, in the ML probe response frame sent by the first EHT AP MLD, the multi-link elements field includes a first device identifier field corresponding to a retrieved third network device, a second device identifier field of a second network device to which the third network device belongs, a relative identifier field, and a link identifier field of at least one link in the retrieved third network device. The second device identifier field of the second network device to which the third network device belongs indicates UHR AP MLD MAC address information. The first device identifier field corresponding to the retrieved third network device indicates an MLD index assigned to the second EHT AP MLD. The relative identifier field indicates the MLD ID information of the third EHT AP MLD indicated by the second EHT AP MLD. The link identifier field of at least one link in the retrieved third network device indicates all or part of the information of at least one link in the requested second EHT AP MLD.

In some application examples, in the multi-link (re)association request frame transmitted by the non-AP MLD to the first EHT AP MLD, the multi-link (re)association request frame includes at least one multi-link element field. The frame structure of each multi-link element field at least includes a multi-link device identifier field, a first device identifier field, and a link identifier field. The multi-link device identifier field indicates the identifier of a first multi-link device that requests to establish a connection or reconnection, for example, a non-AP MLD MAC address. The first device identifier field indicates a first-type device identifier that requests to establish a connection or re-connection with the first multi-link device, for example, an MLD index (or an MLD ID). The link identifier field indicates a link identifier that requests to establish a connection or reconnection with the first multi-link device, for example, at least one link ID. See FIG. 18.

In some application examples, in the multi-link (re)association response frame transmitted by the EHT AP MLD to the first non-AP MLD, the multi-link (re)association response frame includes at least one multi-link element field. The frame structure of each multi-link element field at least includes a second device identifier field, a first device identifier field, a link identifier field, and a link status field. The second device identifier field indicates a second-type device identifier that requests to establish a connection or reconnection with the first multi-link device, for example, a UHR AP MLD MAC address. The first device identifier field indicates a first-type device identifier that requests to establish a connection or reconnection with the first multi-link device, for example, an MLD index (or an MLD ID). The link identifier field indicates a link identifier that requests to establish a connection or reconnection with the first multi-link device, for example, at least one link ID. The link status field indicates link status information that requests to establish a connection or reconnection with the first multi-link device, for example, link status information. See FIG. 18.

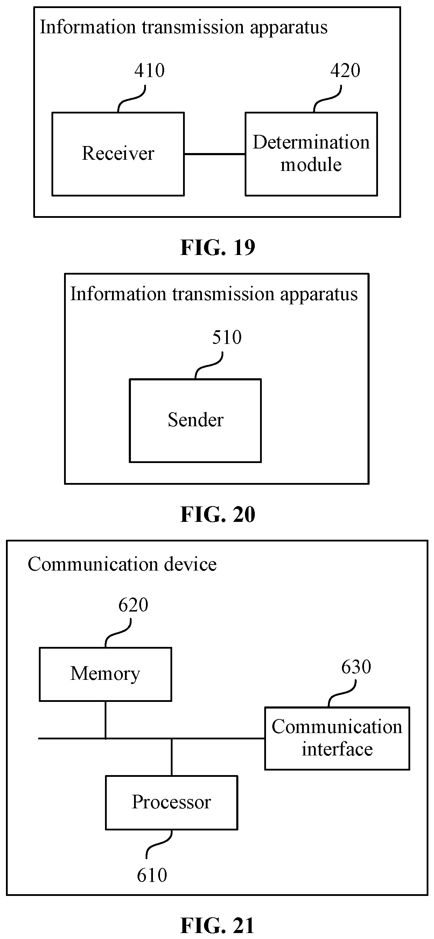

FIG. 19 is a block diagram of an information transmission apparatus according to embodiments of the present application. This embodiment is applied to a first multi-link device. As shown in FIG. 19, the information transmission apparatus of this embodiment includes a receiver 410 and a determination module 420.

The receiver 410 is configured to receive a specific identifier sent by a first network device.

The determination module 420 is configured to determine, according to the specific identifier, whether the first network device and a third network device belong to the same second network device.

In an embodiment, determining, according to the specific identifier, whether the first network device and the third network device belong to the same second network device includes determining, according to the specific identifier, whether a first network device to which a current working link of the first multi-link device belongs and a third network device to which at least one link carried in the specific identifier belongs belong to the same second network device.

In an embodiment, the specific identifier sent by the first network device is received through a beacon frame.

In an embodiment, the information transmission apparatus applied to the first multi-link device also includes a sender and a receiver.

The sender is configured to send a first probe request frame to the first network device on a working link of the first network device.

The receiver is configured to receive, through a first probe response frame, the specific identifier sent by the first network device on the working link.

In an embodiment, the specific identifier at least includes a second-type device identifier and a first-type device identifier.

In an embodiment, the specific identifier is located in a Reduced Neighbor Report (RNR) field of the beacon frame and an RNR field of the first probe response frame.

The frame structure of the RNR field at least includes a same-device indication field for indicating whether the first network device and the third network device belong to the same second network device, where the first network device and the third network device belong to the same type of network device.

The frame structure of the RNR field at least includes a first device identifier field for indicating a first-type device identifier assigned by the second network device to the third network device.

In an embodiment, the beacon frame of the specific identifier and the first probe response frame of the specific identifier each include a multi-link element field. The frame structure of a status bitmap field in the multi-link element field at least includes a first device identifier indication field for indicating whether a first-type device identifier is carried and a second device identifier indication field for indicating whether a second-type device identifier is carried.

The frame structure of a common information field in the multi-link element field at least includes a first device identifier field for indicating a first-type device identifier of the third network device and a second device identifier field for indicating a second-type device identifier of a second network device to which the third network device belongs.

In an embodiment, the information transmission apparatus applied to the first multi-link device includes the sender and the receiver.

The sender is also configured to send a second probe request frame to the first network device.

The receiver is also configured to receive, through a second probe response frame, the specific identifier sent by the first network device.

In an embodiment, the specific identifier at least includes a first-type device identifier, a second-type device identifier, and a link identifier.

In an embodiment, the frame structure of a multi-link element field in the second probe request frame at least includes a first device identifier field corresponding to a third network device expected to be retrieved, a second device identifier field of a second network device to which the third network device belongs, and a link identifier field of at least one link in the third network device expected to be retrieved.

The frame structure of a multi-link element field in the second probe response frame at least includes a first device identifier field corresponding to the retrieved third network device, the second device identifier field of the second network device to which the third network device belongs, and a link identifier field of at least one link in the retrieved third network device.

In an embodiment, the information transmission apparatus applied to the first multi-link device includes the sender and the receiver.

The sender is also configured to send a third probe request frame to the first network device.

The receiver is also configured to receive, through a third probe response frame, the specific identifier sent by the first network device.

In an embodiment, the specific identifier at least includes a first-type device identifier, a second-type device identifier, a link identifier, and a relative identifier of an adjacent first-type device.

In an embodiment, the frame structure of a multi-link element field in the third probe request frame at least includes a first device identifier field corresponding to a third network device expected to be retrieved, a second device identifier field of a second network device to which the third network device belongs, a relative identifier field of a fourth network device, and a link identifier field of at least one link in a fourth network device expected to be retrieved.

The frame structure of a multi-link element field in the third probe response frame at least includes a first device identifier field corresponding to a retrieved third network device, the second device identifier field of the second network device to which the third network device belongs, a relative identifier field, and a link identifier field of at least one link in the retrieved third network device.

The fourth network device and the third network device exist on the same physical device.

In an embodiment, the information transmission apparatus applied to the first multi-link device includes the sender and the receiver.

The sender is also configured to send a multi-link association request frame or a multi-link re-association request frame to the first network device.

The receiver is also configured to receive a multi-link association response frame or a multi-link re-association response frame sent by the first network device.

In an embodiment, a multi-link reconnection request frame and a multi-link connection request frame each include at least one multi-link element field; and the frame structure of the at least one multi-link element field at least includes a multi-link device identifier field, a first device identifier field, and a link identifier field.

A multi-link reconnection response frame and a multi-link connection response frame each include a multi-link element field; and the frame structure of the multi-link element field at least includes a second device identifier field, a first device identifier field, a link identifier field, and a link status field.

The multi-link device identifier field indicates the identifier of the first multi-link device that requests to establish a connection or a reconnection. The second device identifier field indicates a second-type device identifier that requests to establish a connection or a reconnection to the first multi-link device. The first device identifier field indicates a first-type device identifier that requests to establish the connection or the reconnection to the first multi-link device. The link identifier field indicates a link identifier that requests to establish the connection or the reconnection to the first multi-link device. The link status field indicates link status information that requests to establish the connection or the reconnection to the first multi-link device.

The information transmission apparatus of this embodiment is configured to perform the information transmission method applied to the first multi-link device according to the embodiment shown in FIG. 10. The implementation principles and technical effects of the information transmission apparatus of this embodiment are similar to those of the information transmission method applied to the first multi-link device according to the embodiment shown in FIG. 10 and thus are not described again here.

FIG. 20 is a block diagram of an information transmission apparatus according to embodiments of the present application. This embodiment is applied to a first network device. As shown in FIG. 20, the data transmission apparatus of this embodiment includes a sender 510.

The sender 510 is configured to send a specific identifier to a first multi-link device to enable the first multi-link device to determine, according to the specific identifier, whether the first network device and a third network device belong to the same second network device.

In an embodiment, the information transmission apparatus applied to the first network device also includes a receiver.

The receiver is configured to receive a first-type device identifier assigned by a second network device.

In an embodiment, the first-type device identifier includes at least one of the media access control (MAC) address of a first-type device or the device index of a first-type device.

In an embodiment, the specific identifier is sent to the first multi-link device through a beacon frame.

In an embodiment, in response to receiving a first probe request frame sent by the first multi-link device, the specific identifier is sent to the first multi-link device through a first probe response frame.

In an embodiment, the specific identifier at least includes a second-type device identifier and a first-type device identifier.

In an embodiment, the specific identifier is located in a Reduced Neighbor Report (RNR) field of the beacon frame and an RNR field of the first probe response frame.

The frame structure of the RNR field at least includes a same-device indication field for indicating whether the first network device and the third network device belong to the same second network device, where the first network device and the third network device belong to the same type of network device.

The frame structure of the RNR field at least includes a first device identifier field for indicating a first-type device identifier assigned by the second network device to the third network device.

In an embodiment, the beacon frame of the specific identifier and the first probe response frame of the specific identifier each include a multi-link element field. The frame structure of a status bitmap field in the multi-link element field at least includes a first device identifier indication field for indicating whether a first-type device identifier is carried and a second device identifier indication field for indicating whether a second-type device identifier is carried.

The frame structure of a common information field in the multi-link element field at least includes a first device identifier field for indicating a first-type device identifier of the third network device and a second device identifier field for indicating a second-type device identifier of a second network device to which the third network device belongs.

In an embodiment, in response to receiving a second probe request frame sent by the first multi-link device, the specific identifier is sent to the first multi-link device through a second probe response frame.

In an embodiment, the specific identifier at least includes a first-type device identifier, a second-type device identifier, and a link identifier.

In an embodiment, the frame structure of a multi-link element field in the second probe request frame at least includes a first device identifier field corresponding to a third network device expected to be retrieved, a second device identifier field of a second network device to which the third network device belongs, and a link identifier field of at least one link in the third network device expected to be retrieved.

The frame structure of a multi-link element field in the second probe response frame at least includes a first device identifier field corresponding to the retrieved third network device, the second device identifier field of the second network device to which the third network device belongs, and a link identifier field of at least one link in the retrieved third network device.

In an embodiment, in response to receiving a third probe request frame sent by the first multi-link device, the specific identifier is sent to the first multi-link device through a third probe response frame.

In an embodiment, the specific identifier at least includes a first-type device identifier, a second-type device identifier, a link identifier, and a relative identifier of an adjacent first-type device.

In an embodiment, the frame structure of a multi-link element field in the third probe request frame at least includes a first device identifier field corresponding to a third network device expected to be retrieved, a second device identifier field of a second network device to which the third network device belongs, a relative identifier field of a fourth network device, and a link identifier field of at least one link in a fourth network device expected to be retrieved.

The frame structure of a multi-link element field in the third probe response frame at least includes a first device identifier field corresponding to a retrieved third network device, the second device identifier field of the second network device to which the third network device belongs, a relative identifier field, and a link identifier field of at least one link in the retrieved third network device.

The fourth network device and the third network device exist on the same physical device.

In an embodiment, the information transmission apparatus applied to the first network device includes the sender and the receiver.

The receiver is configured to receive a multi-link association request frame or a multi-link re-association request frame sent by the first multi-link device.

The sender is configured to send a multi-link association response frame or a multi-link re-association response frame to the first multi-link device.

In an embodiment, a multi-link reconnection request frame and a multi-link connection request frame each include at least one multi-link element field; and the frame structure of the at least one multi-link element field at least includes a multi-link device identifier field, a first device identifier field, and a link identifier field.

A multi-link reconnection response frame and a multi-link connection response frame each include a multi-link element field; and the frame structure of the multi-link element field at least includes a second device identifier field, a first device identifier field, a link identifier field, and a link status field.

The multi-link device identifier field indicates the identifier of the first multi-link device that requests to establish a connection or a reconnection. The second device identifier field indicates a second-type device identifier that requests to establish a connection or a reconnection to the first multi-link device. The first device identifier field indicates a first-type device identifier that requests to establish the connection or the reconnection to the first multi-link device. The link identifier field indicates a link identifier that requests to establish the connection or the reconnection to the first multi-link device. The link status field indicates link status information that requests to establish the connection or the reconnection to the first multi-link device.

The information transmission apparatus of this embodiment is configured to perform the information transmission method applied by the first network device according to the embodiment shown in FIG. 11. The implementation principles and technical effects of the information transmission apparatus of this embodiment are similar to those of the information transmission method applied by the first network device according to the embodiment shown in FIG. 11 and thus are not described again here.

FIG. 21 is a diagram illustrating the structure of a communication device according to embodiments of the present application. As shown in FIG. 21, the device of the present application includes a processor 610, a memory 620, and a communication interface 630. One or more processors 610 may be provided in the device. FIG. 21 shows one processor 610 as an example. One or more memories 620 may be provided in the device. FIG. 21 shows one memory 620 as an example. The processor 610, the memory 620, and the communication interface 630 in the device may be connected via a bus or in other manners. The connection via a bus is shown as an example in FIG. 21. In this embodiment, the device may be a first multi-link device or a first network device.

As a computer-readable storage medium, the memory 620 may be configured to store software programs, computer-executable programs and modules, such as program instructions/modules (for example, the receiver 410 and the determination module 420 in the information transmission apparatus applied to the first multi-link device) corresponding to the device according to any embodiment of the present application. The memory 620 may include a program storage region and a data storage region. The program storage region may store an operating system and an application program required by at least one function. The data storage region may store data created according to the use of the device. Additionally, the memory 620 may include a high-speed random-access memory and may also include a nonvolatile memory such as at least one disk memory, a flash memory, or another nonvolatile solid-state memory. In some examples, the memory 620 may be remote from the processor 610 and connectable to the device via a network. Examples of the network include, but are not limited to, the Internet, an intranet, a local area network, a mobile communication network, and a combination thereof. The communication interface 630 is configured for communication interactions between multiple communication devices.

In the case where the communication device is the first multi-link device, the device may be configured to perform the information transmission method applied by the first multi-link device according to any previous embodiment and has corresponding functions and effects.

In the case where the communication device is the first network device, the device may be configured to perform the information transmission method applied by the first network device according to any previous embodiment and has corresponding functions and effects.

Embodiments of the present application also provide a storage medium including computer-executable instructions. The computer-executable instructions are configured to, when executed by a computer processor, cause the computer processor to perform an information transmission method applied to a first multi-link device. The information transmission method applied to the first multi-link device includes receiving a specific identifier sent by a first network device; and determining, according to the specific identifier, whether the first network device and a third network device belong to the same second network device.

Embodiments of the present application also provide a storage medium including computer-executable instructions. The computer-executable instructions are configured to, when executed by a computer processor, cause the computer processor to perform an information transmission method applied to a first network device. The information transmission method applied to the first network device includes sending a specific identifier to a first multi-link device to enable the first multi-link device to determine, according to the specific identifier, whether the first network device and a third network device belong to the same second network device.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The preceding describes preferred embodiments of the present application that are not intended to limit the present application. For those skilled in the art, the present application may have various modifications and variations. Any modifications, equivalent substitutions, improvements and the like made within the spirit and principle of the present application should fall within the scope of the present application.

## Claims

1. An information transmission method, applied to a first multi-link device and comprising:
receiving a specific identifier sent by a first network device; and
determining, according to the specific identifier, whether the first network device and a third network device belong to a same second network device.

2. The method of claim 1, wherein determining, according to the specific identifier, whether the first network device and the third network device belong to the same second network device comprises:
determining, according to the specific identifier, whether a first network device to which a current working link of the first multi-link device belongs and a third network device to which at least one link carried in the specific identifier belongs belong to a same second network device.

3. The method of claim 1, wherein the specific identifier sent by the first network device is received through a beacon frame.

4. The method of claim 1, further comprising:
sending a first probe request frame to the first network device on a working link of the first network device; and
receiving, through a first probe response frame, the specific identifier sent by the first network device on the working link.

5. The method of claim 3 or 4, wherein the specific identifier at least comprises a second-type device identifier and a first-type device identifier.

6. The method of claim 3 or 4, wherein the specific identifier is located in a Reduced Neighbor Report, RNR, field of the beacon frame and an RNR field of the first probe response frame;
a frame structure of the RNR field at least comprises a same-device indication field for indicating whether the first network device and the third network device belong to the same second network device, wherein the first network device and the third network device belong to a same type of network device; and
the frame structure of the RNR field at least comprises a first device identifier field for indicating a first-type device identifier assigned by the second network device to the third network device.

7. The method of claim 3 or 4, wherein
each of the beacon frame of the specific identifier and the first probe response frame of the specific identifier comprises a multi-link element field;
a frame structure of a status bitmap field in the multi-link element field at least comprises a first device identifier indication field for indicating whether a first-type device identifier is carried and a second device identifier indication field for indicating whether a second-type device identifier is carried; and
a frame structure of a common information field in the multi-link element field at least comprises a first device identifier field for indicating a first-type device identifier of the third network device and a second device identifier field for indicating a second-type device identifier of a second network device to which the third network device belongs.

8. The method of claim 1, further comprising:
sending a second probe request frame to the first network device; and
receiving, through a second probe response frame, the specific identifier sent by the first network device.

9. The method of claim 8, wherein the specific identifier at least comprises a first-type device identifier, a second-type device identifier, and a link identifier.

10. The method of claim 8, wherein
a frame structure of a multi-link element field in the second probe request frame at least comprises a first device identifier field corresponding to a third network device expected to be retrieved, a second device identifier field of a second network device to which the third network device belongs, and a link identifier field of at least one link in the third network device expected to be retrieved; and
a frame structure of a multi-link element field in the second probe response frame at least comprises a first device identifier field corresponding to the retrieved third network device, the second device identifier field of the second network device to which the third network device belongs, and a link identifier field of at least one link in the retrieved third network device.

11. The method of claim 1, further comprising:
sending a third probe request frame to the first network device; and
receiving, through a third probe response frame, the specific identifier sent by the first network device.

12. The method of claim 11, wherein the specific identifier at least comprises a first-type device identifier, a second-type device identifier, a link identifier, and a relative identifier of an adjacent first-type device.

13. The method of claim 11, wherein
a frame structure of a multi-link element field in the third probe request frame at least comprises a first device identifier field corresponding to a third network device expected to be retrieved, a second device identifier field of a second network device to which the third network device belongs, a relative identifier field of a fourth network device, and a link identifier field of at least one link in a fourth network device expected to be retrieved; and
a frame structure of a multi-link element field in the third probe response frame at least comprises a first device identifier field corresponding to a retrieved third network device, the second device identifier field of the second network device to which the third network device belongs, a relative identifier field, and a link identifier field of at least one link in the retrieved third network device;
wherein the fourth network device and the third network device exist on a same physical device.

14. The method of claim 1, further comprising:
sending a multi-link association request frame or a multi-link re-association request frame to the first network device; and
receiving a multi-link association response frame or a multi-link re-association response frame sent by the first network device.

15. The method of claim 14, wherein
each of a multi-link reconnection request frame and a multi-link connection request frame comprises at least one multi-link element field; and a frame structure of the at least one multi-link element field at least comprises a multi-link device identifier field, a first device identifier field, and a link identifier field; and
each of a multi-link reconnection response frame and a multi-link connection response frame comprises a multi-link element field; and a frame structure of the multi-link element field at least comprises a second device identifier field, a first device identifier field, a link identifier field, and a link status field;
wherein the multi-link device identifier field indicates an identifier of the first multi-link device that requests to establish a connection or a reconnection; the second device identifier field indicates a second-type device identifier that requests to establish a connection or a reconnection to the first multi-link device; the first device identifier field indicates a first-type device identifier that requests to establish the connection or the reconnection to the first multi-link device; the link identifier field indicates a link identifier that requests to establish the connection or the reconnection to the first multi-link device; and the link status field indicates link status information that requests to establish the connection or the reconnection to the first multi-link device.

16. An information transmission method, applied to a first network device and comprising:
sending a specific identifier to a first multi-link device to enable the first multi-link device to determine, according to the specific identifier, whether the first network device and a third network device belong to a same second network device.

17. The method of claim 16, further comprising:
receiving a first-type device identifier assigned by a second network device.

18. The method of claim 17, wherein the first-type device identifier at least comprises one of a media access control, MAC, address of a first-type device or a device index of a first-type device.

19. The method of claim 16, wherein the specific identifier is sent to the first multi-link device through a beacon frame.

20. The method of claim 16, wherein in response to receiving a first probe request frame sent by the first multi-link device, the specific identifier is sent to the first multi-link device through a first probe response frame.

21. The method of claim 16, wherein in response to receiving a second probe request frame sent by the first multi-link device, the specific identifier is sent to the first multi-link device through a second probe response frame.

22. The method of claim 16, wherein in response to receiving a third probe request frame sent by the first multi-link device, the specific identifier is sent to the first multi-link device through a third probe response frame.

23. The method of any one of claims 16 to 22, further comprising:
receiving a multi-link association request frame or a multi-link re-association request frame sent by the first multi-link device; and
sending a multi-link association response frame or a multi-link re-association response frame to the first multi-link device.

24. A communication device, comprising a memory and at least one processor, wherein
the memory is configured to store at least one program; and
when executed by the at least one processor, the at least one program causes the at least one processor to perform the method of any one of claims 1 to 15 or the method of any one of claims 16 to 23.

25. A storage medium storing a computer program which, when executed by a processor, causes the processor to perform the method of any one of claims 1 to 15 or the method of any one of claims 16 to 23.
